Europäisches Patentamt

European Patent Office

Office européen des brevets

(19)

(11) **EP 0 930 551 B1**

(12) **FASCICULE DE BREVET EUROPEEN**

(45) Date de publication et mention
de la délivrance du brevet:
**12.05.2004 Bulletin 2004/20**

(51) Int Cl.⁷: **G05B 19/23**, G05B 19/18

(21) Numéro de dépôt: **99450001.5**

(22) Date de dépôt: **13.01.1999**

(54) **Procédé de pilotage de déposé de mèches par enroulement ou au contact sur des structures de grandes dimensions et machine pour sa mise en oeuvre**

Verfahren zur Steuerung der Absetzung eines Bündels durch Umwickeln oder Kontakt auf grossvolumigen Körpern und Maschine dafür

Method for controlling the depositing of bundles by winding or contact with structures of large dimensions, and machine for carrying out the method

(84) Etats contractants désignés:
**DE ES IT**

(30) Priorité: **14.01.1998 FR 9800519**

(43) Date de publication de la demande:
**21.07.1999 Bulletin 1999/29**

(73) Titulaire: **AEROSPATIALE SOCIETE NATIONALE INDUSTRIELLE, Société Anonyme
75781 Paris Cedex 16 (FR)**

(72) Inventeurs:
• **Ninet, Claude Alain, Résidence Formanoir
33600 Pessac (FR)**

• **Le Gratiet, Hervé
33160 Saint Aubin de Médoc (FR)**

(74) Mandataire: **Thébault, Jean-Louis
Cabinet Thébault
111 cours du Médoc
33300 Bordeaux (FR)**

(56) Documents cités:
**EP-A- 0 191 655       EP-A- 0 338 106
EP-A- 0 350 645       US-A- 3 448 253
US-A- 4 206 393       US-A- 5 396 821**

## Description

La présente invention se rapporte à la réalisation de structures en matériau composite de grandes dimensions, et d'une manière générale, des structures à diamètre évolutif tels que par exemple des corps de propulseur, plus communément appelés capacités.

Une capacité est une structure généralement bobinée en matériau composite et constituée d'une virole cylindrique reliant deux fonds d'extrémité, respectivement avant et arrière, par exemple hémisphériques et munis chacun d'une embase métallique.

Pour réaliser une telle structure, on utilise un mandrin rigide rotatif qui sert de support au bobinage et qui est extrait de la capacité après polymérisation de la résine du matériau composite.

Le mandrin est recouvert à l'aide de mèches déposées en nappes bobinées ou au contact, par exemple pour réaliser des renforts localisés.

Par mèches, on entend un groupe de filaments ou fibrilles continues, agglomérées, en forme de ruban ou bande, stocké sur une bobine.

Généralement, plusieurs mèches côte à côte sont déposées simultanément.

Les techniques actuelles de réalisation de telles capacités à l'aide d'un mandrin disposé à l'horizontale et entraîné en rotation par un tour spécial entre les poupées duquel est monté le mandrin, mettent en oeuvre un mode, dit temporel, de commande d'asservissement d'un ensemble d'axes de mobilité, dans lequel la consigne de position, de vitesse et d'accélération de chaque axe est une fonction du temps. Un dispositif basé sur une telle technique est connu du document EP 0 191 655 A1.

Les machines de bobinage/dépose au contact utilisées pour la réalisation de ces capacités comprennent un certain nombre d'axes motorisés asservis.

Pour le bobinage, cinq axes sont nécessaires, à savoir un axe de rotation du mandrin, c'est à dire l'axe de symétrie de la capacité à réaliser, un axe de déplacement rectiligne parallèle à l'axe du mandrin de la tête de bobinage, un axe de déplacement rectiligne de ladite tête orthogonalement à l'axe du mandrin, un axe de rotation de la tête, dit "coude", vertical et orthogonal à l'axe précédent et, enfin, un axe de rotation, dit "poignet", de la tête, orthogonal aux deux axes précédents.

Pour effectuer une dépose au contact, la machine peut comprendre deux axes de rotation supplémentaires, parallèles à l'axe du mandrin, respectivement pour le déplacement en altitude de la tête et pour l'orientation de la tête vers l'axe du mandrin pour appliquer cette dernière contre la surface de dépose perpendiculairement à celle-ci.

Dans le mode de commande temporel, la position, la vitesse et l'accélération, pour chaque axe, est une fonction pré-programmée du temps et le rôle de la commande numérique de la machine est de réaliser une interpolation permanente des paramètres de l'ensemble des axes en vue d'obtenir un suivi aussi parfait que possible des trajectoires désirées.

Le pilotage d'une machine à bobiner doit répondre, d'une part, à la précision de suivi d'une trajectoire pré-définie et, d'autre part, à une minimisation des temps de cycle de dépose par application d'accélérations et décélérations sur l'ensemble des axes permettant d'optimiser au maximum la vitesse de dépose des mèches en tout point du mandrin, la vitesse de rotation de ce dernier augmentant sur les fonds quand le diamètre de dépose diminue.

A ces exigences, il faut ajouter, et c'est le cas présentement des capacités de grandes dimensions, la prise en compte de diamètres et d'inerties pouvant être très importants. A titre d'illustration, l'invention vise la réalisation de capacités pouvant dépasser un diamètre de 5 mètres et présenter un moment d'inertie de l'ordre de 800 000 N.m$^2$ ou davantage.

La prise en compte de ces différents critères complique singulièrement le pilotage, et tout spécialement en mode temporel.

En effet, si l'asservissement de position sur plusieurs axes relativement peu chargés est fort bien maîtrisé par les commandes numériques classiques actuelles, chaque axe étant piloté indépendamment des autres, par contre, l'asservissement simultané par ce mode de plusieurs axes dont un au moins est fortement chargé et non infiniment raide est problématique, voire impossible au delà d'une certaine inertie.

Dans le cas du bobinage de grandes capacités, c'est bien évidemment l'axe du mandrin, ainsi que l'ensemble de la chaîne de transmission, depuis le moteur d'entraînement jusqu'au mandrin, qui sont très fortement sollicités puisqu'il faut qu'à chaque période d'échantillonnage, l'axe du mandrin soit dans la position programmée, simultanément aux autres axes, lesquels sont bien moins chargés, pour décrire la trajectoire définie.

Avec ce type de pilotage, il se produit un décalage temporel entre la commande passée au moteur et la réaction du mandrin, celui-ci jouant le rôle d'un ressort et emmagasinant une partie de l'énergie fournie par le moteur.

A chaque fois que le moteur souhaite accélérer, de la torsion se produit dans l'ensemble de la ligne de transmission, ce qui fait que le mandrin tarde à atteindre la position commandée. Ceci peut être compensé par des systèmes anticipateurs du premier et du deuxième ordre, mais au prix d'un réglage très fin, en fonction de la raideur en torsion de la transmission et de son inertie.

Malheureusement, ces paramètres varient non seulement d'une capacité à une autre, mais également pour une même capacité, au cours du bobinage, à cause de l'importance de la masse de composite déposée à la périphérie, l'inertie du composite déposé pouvant par exemple représenter plus de 10 % de l'inertie totale en fin de bobinage, ce qui signifie que la motorisation doit subir une variation d'inertie de plus de 10 % entre le début et la fin du bobinage.

Il s'ensuit l'apparition inévitable, avec ce type d'asservissement, de phénomènes de "pompage" pendant le suivi de trajectoires ne permettant pas d'obtenir le compromis vitesses/accélérations/précisions recherché et susceptible par ailleurs, par les effets de surtensions mécaniques engendrées dans la chaîne de transmission mécanique, d'endommager ou détruire cette dernière.

Dans les cas extrêmes, si on veut atteindre la précision souhaitée, on risque une instabilité dans la mise en position du mandrin. En effet, les consignes nécessaires pour obtenir le meilleur compromis temps de cycle/précision excitent la fréquence de résonance de la transmission mécanique du mandrin. Ce phénomène est aggravé par l'accroissement du diamètre qui nécessite un positionnement angulaire plus précis.

La présente invention vise précisément à permettre le bobinage/dépose au contact de grandes capacités en recourant à un procédé de pilotage palliant aux inconvénients et limites du pilotage temporel.

A cet effet, l'invention a pour objet un procédé de pilotage de dépose de mèches par enroulement ou au contact sur des structures de grandes dimensions, dans lequel la dépose est effectuée sur un mandrin entraîné en rotation autour de son axe par un dispositif de support/entraînement approprié, à l'aide d'une tête de dépose appropriée, réglable en position suivant au moins un premier axe de déplacement rectiligne parallèle à l'axe de rotation du mandrin et un second axe de déplacement rectiligne (Y) orthogonal audit axe du mandrin, consistant principalement:

- à prendre comme axe-maître l'axe de rotation du mandrin,
- à commander l'axe-maître par des consignes de vitesse suivant un programme pré-établi,
- à obtenir l'information position angulaire instantanée du mandrin au cours de sa rotation et,
- à partir d'une table trajectoire préétablie intégrant la cinématique de l'axe-maître et donnant pour chaque axe-esclave les valeurs de consigne correspondant à des positions angulaires prédéterminées de l'axe-maître, à asservir les autres axes dits axes esclaves à l'axe-maître en fonction de la position angulaire de l'axe-maître, ce, à partir de la position angulaire instantanée de l'axe-maître, en calculant à partir de ladite table trajectoire, pour chaque position instantanée de l'axe maître, les valeurs de consigne correspondantes de chaque axe-esclave et en appliquant ces consignes audits axes-esclaves.

Les avantages essentiels d'un tel mode de pilotage sont une stabilité totale du mandrin et donc une meilleure précision dans la dépose des mèches puisque celle-ci s'effectue en fonction de la position réelle du mandrin et non plus sur une consigne de position calculée.

Ce pilotage est bien adapté au bobinage de grandes structures présentant d'importantes inerties.

L'invention a également pour objet une machine pour la mise en oeuvre du procédé ci-dessus, comprenant :

- des moyens pour supporter et entraîner un mandrin en rotation à l'horizontale autour de son axe ;
- une tête de dépose de mèches, mobile suivant au moins un premier axe de déplacement rectiligne parallèle à l'axe du mandrin et un second axe de déplacement rectiligne orthogonal à l'axe du mandrin ;
- un stand de bobines de mèches alimentant ladite tête ;
- des moyens de commande/contrôle informatisés incluant une commande numérique et son pupitre de contrôle ;

caractérisée en ce que ladite commande numérique comprend un générateur de consigne relié aux moyens de commande des divers axes de rotation ou déplacement, un interpolateur, une commande de vitesse et une table trajectoire, un dispositif codeur incrémental de la position angulaire instantanée de l'ensemble rotatif du mandrin étant relié audit interpolateur.

Suivant un mode de mise en oeuvre, la tête de dépose est en outre orientable vis à vis du mandrin suivant au moins un axe de rotation et, de préférence, suivant un axe, dit coude, vertical et orthogonal audit second axe de déplacement et un axe, dit poignet, orthogonal aux deux derniers axes.

Suivant une variante permettant à la fois la dépose par enroulement et la dépose au contact, la machine comporte en outre au moins un axe de rotation pour orienter la tête de dépose vis à vis du mandrin.

Avantageusement et pour permettre une dépose au contact plus facile et plus précise, la machine comporte deux axes supplémentaires de rotation de la tête de dépose parallèlement à l'axe du mandrin, respectivement pour un déplacement en altitude de la tête et pour une orientation de cette dernière en direction de l'axe du mandrin.

La tête de dépose est de préférence montée interchangeable notamment pour substituer une tête de dépose au contact à une tête de dépose par bobinage.

Le dispositif codeur de la position angulaire instantanée de l'ensemble mandrin comprend un seul codeur monté, de préférence, sur le mandrin, mais il peut l'être également sur l'arbre moteur, ou deux codeurs, l'un, monté sur le mandrin, l'autre, sur l'arbre moteur.

Suivant encore une autre caractéristique de la machine, un découplage est réalisé dans les déplacements rectilignes de la tête de dépose parallèlement à l'axe du mandrin, en disposant la tête et le stand de mise en tension des mèches sur un chariot de bobinage monté mobile parallèlement à l'axe du mandrin sur un chariot suiveur monté lui-même mobile parallèlement audit axe du mandrin. Un tel agencement est de nature à permettre d'encaisser une grande accélération de la tête de dépose sans impliquer le déplacement de la masse importante des bobines des mèches.

D'autres caractéristiques est avantages ressortiront de la description qui va suivre du procédé de l'invention et de modalités de sa mise en oeuvre, description donnée à titre d'exemple uniquement et en regard des dessins annexés sur lesquels :

- Figure 1 est une vue schématique en perspective d'une machine de bobinage/dépose au contact de grandes capacités ;
- Figure 2 est un bloc diagramme illustrant le principe de pilotage de l'invention, et
- Figure 3 est un schéma illustrant le principe de découplage du déplacement parallèlement à l'axe du mandrin de l'ensemble bobines-tête de dépose.

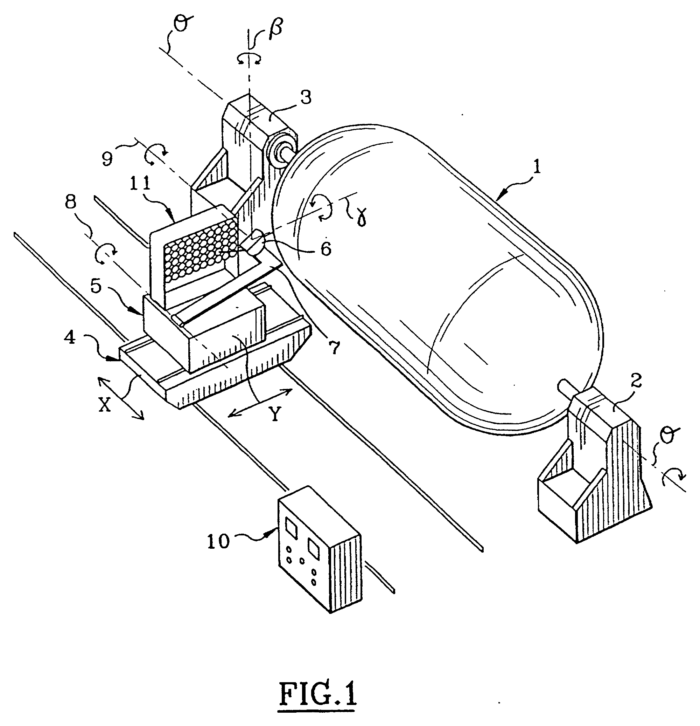

Sur la figure 1, on a représenté en 1 un mandrin destiné à servir de support au bobinage d'une capacité de grandes dimensions, par exemple une virole cylindrique pourvue de fonds avant et arrière hémisphériques, de cinq à six mètres de diamètre et d'une longueur d'une dizaine de mètres.

Le mandrin 1 est monté à l'horizontale entre deux poupées 2 et 3, dont l'une (2) est motrice, l'axe des poupées, désigné par θ, coïncidant avec l'axe du mandrin 1.

La poupée motrice 2 est fixe, cependant que l'autre poupée 3 est mobile linéairement en direction de la poupée fixe 2 pour la réception de mandrins de diverses longueurs, selon la capacité à réaliser.

Latéralement au mandrin 1 et parallèlement à l'axe θ de ce dernier, suivant la direction X, peut se déplacer un premier chariot 4 portant un second chariot 5, mobile sur le chariot 4 suivant une direction Y horizontale, orthogonale à l'axe θ.

Le second chariot 5 porte une tête 6 de bobinage-dépose au contact, montée à l'extrémité d'un bras 7 dirigé vers le mandrin 1 et monté oscillant à son autre extrémité sur le chariot 5, autour d'un axe 8 parallèle à l'axe θ.

La tête 6 est par ailleurs montée rotative à l'extrémité du bras suivant trois axes cartésiens, à savoir un axe vertical β, dit "coude", un axe horizontal γ orthogonal à l'axe θ, dit "poignet" et un axe horizontal 9 d'orientation de la tête 6 en direction de l'axe θ.

La machine schématisée sur la figure 1 comporte ainsi sept axes de mobilité permettant à la tête 6 appropriée d'effectuer un bobinage ou une dépose au contact.

Bien entendu, l'agencement représenté pour obtenir les sept axes de mobilité est simplement illustratif car différents schémas cinématiques connus sont possibles pour conférer à la tête de dépose 6 le nombre d'axes désirés.

Chaque axe est commandé et contrôlé par des moyens appropriés, en particulier un moteur électrique.

Le mandrin 1 est entraîné par une chaîne cinématique comprenant un moteur électrique entraînant par l'intermédiaire d'un réducteur un arbre solidaire du mandrin.

Un variateur de vitesse permet de régler la vitesse de rotation de l'arbre moteur.

Les autres axes comportent des moyens d'entraînement embarqués respectivement sur les chariots 4, 5, le bras 7 et la tête de dépose 6.

Tous ces moyens sont reliés à un pupitre de contrôle symbolisé en 10 où sont regroupés la commande numérique de la machine, ainsi que tous les organes de commande et de visualisation nécessaires à la mise en route de l'automatisme et un superviseur permettant l'ensemble des interactions avec l'opérateur à l'aide d'un logiciel de supervision spécifique et, d'une manière générale tous les moyens de commande, contrôle, signalisation du fonctionnement de la machine.

Sur le chariot 5 est embarqué un ensemble 11 de fourniture de mèches à la tête de dépose 6, comprenant un stand bobines et un stand de mise en tension des mèches délivrées à la tête de dépose.

La machine doit pouvoir effectuer selon les besoins un bobinage longitudinal, avec un angle de dépose pouvant varier entre 0° et 90°, un bobinage circonférentiel et un bobinage au contact et, ce, pour des mèches pré-imprégnées ou non.

Chaque mèche est issue d'une bobine du stand 11 et plusieurs mèches sont regroupées au niveau du stand de tension pour former une nappe délivrée à la tête de dépose 6.

Le bobinage et la dépose au contact nécessitent deux têtes 6 distinctes, c'est la raison pour laquelle la tête est montée amovible sur le bras 7.

Pour les opérations de bobinage, les axes 8 et 9 sont immobiles et la machine utilise cinq axes, à savoir les axes θ, X, Y et β, γ, la tête devant être orientée dans l'axe de la nappe en cours d'enroulement sur le mandrin 1.

Pour les opérations de dépose au contact, les sept axes sont utilisés, la tête 6 devant être positionnée en altitude par rapport à l'axe θ en en direction de ce dernier afin de venir en contact avec le mandrin suivant une normale à sa surface au point de contact.

L'ensemble de l'installation décrite ci-dessus est bien connu, à la fois dans sa structure et dans son fonctionnement, et n'a pas besoin d'être décrit plus en détail.

Le système fonctionne habituellement, par exemple pour un bobinage, suivant un mode de pilotage dit temporel dans lequel chaque axe θ, X, Y, β, γ est piloté indépendamment les uns des autres, en fonction du temps, à partir de courbes de trajectoires préétablies.

Si un tel pilotage convient pour réaliser des structures bobinées de petites ou moyennes dimensions pour lesquelles la machine de bobinage ne comporte pas d'axe fortement chargé, il n'en vas pas de même pour des structures de grandes dimensions à cause de leur masse qui charge de manière trop importante l'un des axes, en l'occurrence l'axe θ de rotation du mandrin support, ce qui induit, comme rappelé plus haut, des erreurs de positionnement du mandrin qui entraînent une dépose incorrecte de la nappe par la tête de dépose sur ledit mandrin.

Conformément à l'invention, au pilotage temporel est substitué un pilotage du type maître-esclave dans lequel l'axe le plus chargé, à savoir l'axe θ d'entraînement en rotation du mandrin 1, est pris comme axe-maître et asservi en vitesse-accélération à des consignes préétablies et les autres axes, X,Y, β, γ et éventuellement 8 et 9, sont pris comme axes-esclaves et asservis à la position de l'axe θ à l'aide de tables de trajectoires également préétablies et à partir des informations fournies par un dispositif codeur sur la position angulaire instantanée du mandrin au cours de sa rotation.

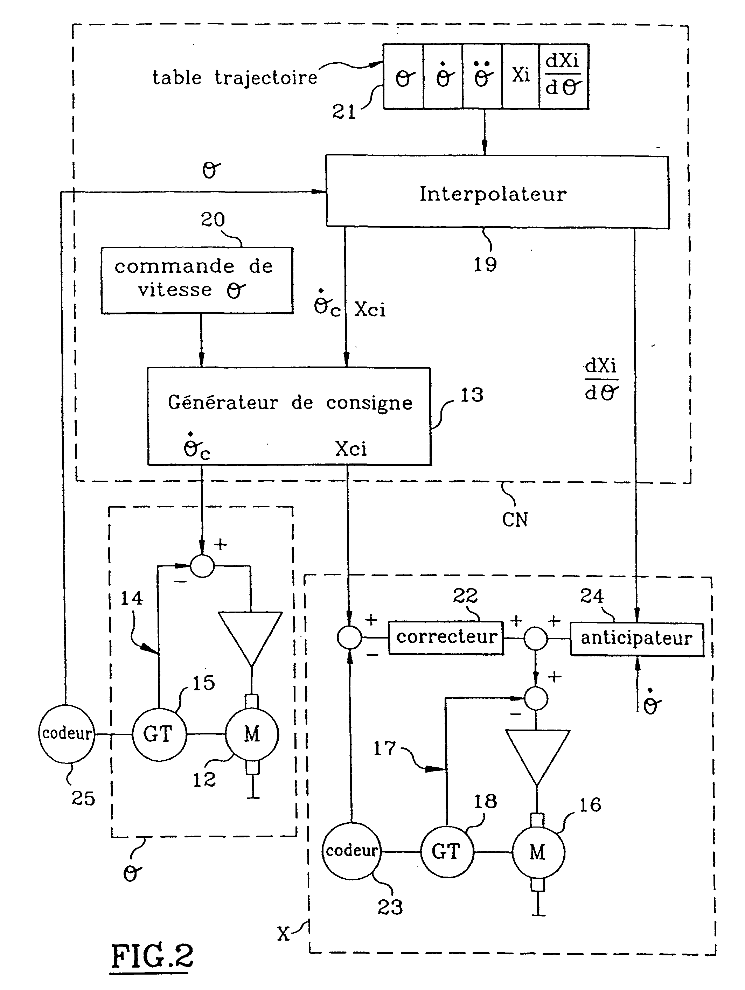

On a représenté schématiquement sur la figure 2 un bloc diagramme de ce mode de pilotage.

Dans cette figure 2 est représenté en 12 le moteur électrique d'entraînement du mandrin 1, relié à un générateur de consigne 13 par l'intermédiaire d'une boucle d'asservissement de vitesse 14 comportant notamment une génératrice tachymétrique 15.

Le générateur de consigne 13 est également relié en parallèle à chaque axe-esclave et plus précisément à chaque moteur affecté aux axes X,Y, β, γ, 8 et 9.

Par souci de clarté, un seul moyen moteur, en l'occurrence le moteur électrique 16 affecté par exemple au déplacement en X du chariot 4, est représenté sur la figure 2. En parallèle avec la chaîne d'asservissement X sont reliées au générateur de consigne 13 les autres chaînes d'asservissement Y, β, γ, 8 et 9 (non représentées).

Chaque chaîne telle que X comporte une boucle 17 d'asservissement de vitesse comportant une génératrice tachymétrique 18.

Le générateur de consigne 1 3 reçoit des valeurs de consignes calculées par un interpolateur 1 9 et pondérées par un facteur de commande de vitesse θ affiché par une commande potentiométrique symbolisée en 20.

L'interpolateur 19 est relié à une table trajectoire 21, réalisée en CFAO et chargée dans la mémoire de la commande numérique CN de la machine.

La table trajectoire 21 établit la correspondance entre les positions de chaque axe-esclave et des positions incrémentales de l'axe θ au cours de sa rotation pour la réalisation du programme de bobinage-dépose concerné.

L'axe θ est commandé en vitesse et la représentation graphique de la variation de vitesse θ dans le temps est effectuée par approximations par des arcs de parabole et par des segments (pour les paliers de vitesse), cependant que les représentations graphiques de l'évolution des autres axes (X, Y, β, γ, 8, 9) par rapport à θ sont des segments de droite, les pentes des variations des positions des axes par rapport à θ (notées

$$\left(\frac{dXi}{d\theta}\right)$$

) étant constantes pour chaque axe.

La commande de vitesse du mandrin est préétablie en fonction des caractéristiques de la capacité à réaliser et après modélisation de la chaîne cinématique constituée par le mandrin 1, son arbre d'entraînement, le moteur d'entraînement 12 et son réducteur, ainsi que le système variateur de vitesse (boucle 14).

Cette modélisation permet de déterminer la fonction de transfert du système moteur-mandrin et va servir à définir les variables utiles qui seront ensuite utilisées pour établir ladite table trajectoire 21.

Des boucles d'asservissement de position de l'axe X sont prévues et constituées d'un filtre correcteur proportionnel et intégral 22 utilisant l'erreur de position (avec l'aide d'un codeur 23 relié à la génératrice tachymétrique 18) et d'un filtre anticipateur 24, du premier et du second ordre, les filtres 22 et 24 étant reliés respectivement au générateur de consigne 13 et à l'interpolateur 19.

L'interpolateur 19 récupère, par un dispositif codeur incrémental 25 relié à la génératrice tachymétrique 15, la position réelle de l'axe θ du mandrin 1. En explorant et utilisant la table trajectoire 21, il calcule les consignes théoriques pour la vitesse de θ (θc) et les positions (Xci) des autres axes (X, Y, β, γ, 8, 9).

En outre, il donne aux anticipateurs (24) des autres axes les valeurs de la pente

$$\left(\frac{dXi}{d\theta}\right)$$

de chaque axe pour le segment de bobinage-dépose en cours.

Le générateur de consigne 13 récupère les valeurs de consigne calculées par l'interpolateur 19, les pondère, comme indiqué plus haut, du facteur de commande de vitesse de θ et agit sur les boucles d'asservissement de θ et des autres axes (X, Y, β, γ, 8, 9).

Les filtres correcteur 22 et anticipateur 24 récupèrent les consignes calculées par le générateur 13, les pentes données par l'interpolateur 19 et les informations des codeurs (23) pour calculer les commandes des moteurs (16).

Le dispositif codeur 25 peut comprendre un seul codeur associé au moteur 12, comme illustré par la figure 2, ou au mandrin 1, ou bien deux codeurs distincts associés, l'un, au moteur 12, l'autre, au mandrin 1, dans ce dernier cas le signal envoyé à la commande numérique CN étant une fonction des deux codeurs.

Si le codeur 25 est sur le moteur 12, il faut tenir compte dans la modélisation de la chaîne cinématique de la torsion de l'arbre de transmission.

Il est nécessaire, par ailleurs, que le codeur de position 25 soit à haute résolution et possède un nombre de points aussi élevé que possible, afin d'atteindre la précision et la résolution demandées dans la dépose de la mèche.

Un tel mode de pilotage assure une totale stabilité du mandrin 1 et donc une meilleure précision dans la dépose des mèches puisque celle-ci s'effectue en fonction de la position réelle du mandrin et non plus sur une consigne de position calculée pour chaque axe.

En effet, on réalise sur l'axe θ, qui est le plus chargé, une bonne précision de pilotage et, les autres axes ayant une inertie et une souplesse négligeables, leur pilotage en position à partir des consignes issues du calcul est facile à réaliser. Quelle que soit la souplesse de l'axe 0 et sa difficulté à se trouver à une position programmée à un instant donné, on est certain que les axes X, Y, β, γ, 8, 9 seront en accord avec θ.

Ce mode de pilotage ne connaît aucune limitation en terme d'inertie et de souplesse de l'axe θ et ne nécessite aucun réglage particulier quand l'inertie de la capacité ou structure à bobiner change.

Il est par ailleurs tout à fait adapté à la description successive de motifs de dépose identiques, comme c'est le cas en bobinage, où une couche est constituée d'une répétition de n boucles décrites suivant la même trajectoire, chaque boucle s'enchaînant dans la continuité de la boucle précédente.

Toutefois, le paramètre d'évolution du suivi de trajectoire étant la rotation de l'axe du mandrin, le pilotage selon l'invention trouve sa limite en deçà d'un seuil de vitesse de rotation de l'axe θ. on peut rencontrer cette situation dans le cas de la dépose au contact ou dans le cas d'un bobinage à angle de dépose trop faible ou nul (bobinage longitudinal).

On peut y remédier partiellement en faisant appel à un codeur 25 à très haute résolution.

Plus généralement, il sera nécessaire, suivant une autre caractéristique de la machine de l'invention, de commuter celle-ci du mode de pilotage du type maître-esclave au mode traditionnel temporel.

A cet effet, et de manière très simple, la commande numérique CN est programmée pour substituer aux entrées du générateur de consigne 13 une commande de vitesse de chaque axe X, Y, β, γ, 8, 9 indépendante en fonction du temps, au lieu et place des éléments 13, 19, 20 et 21 de la figure 2. Une telle commande de vitesse opère par simple lecture d'une table trajectoire comportant les positions dans le temps calculées de chacun desdits axes.

La commutation permet également de faire bobiner par exemple par la même machine des capacités de faible inertie (en pilotage temporel) et des capacités de grande inertie (en pilotage maître-esclave).

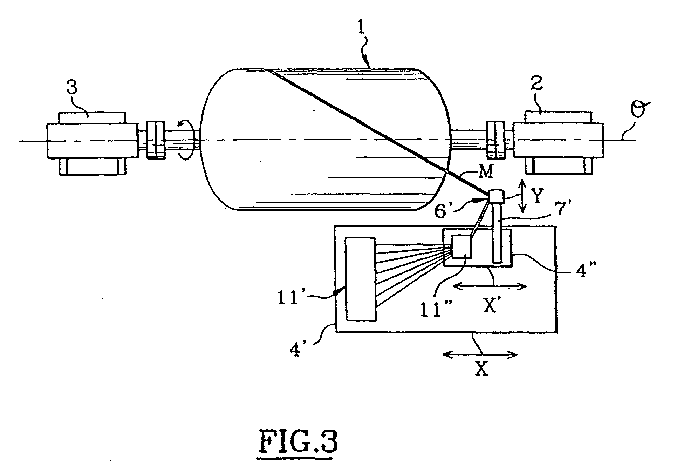

La figure 3 illustre une variante de réalisation de la machine dans laquelle on réalise un découplage du déplacement suivant l'axe X.

A cet effet, le chariot 4' mobile en X porte le stand bobines 11' ainsi qu'un chariot 4", dit de bobinage, monté mobile sur le chariot 4' suivant un axe X' parallèle à X.

Le chariot 4" porte un bras oscillant 7' analogue au bras 7, ainsi que le stand 11" de tension et présentation des mèches à la tête de dépose 6' à l'extrémité du bras 7'. Le pivotement du bras 7' assure le déplacement en Y de la tête de dépose des mèches M sur le mandrin 1.

Un tel agencement permet d'encaisser une grande accélération de la tête de dépose sans impliquer le déplacement de la masse importante des bobines du stand 11' embarqué sur le chariot suiveur 4' qui se déplace moins vite que le chariot 4".

Bien entendu, l'invention n'est pas limitée aux modes de mise en oeuvre représentés et décrits ci-dessus, mais en couvre au contraire toutes les variantes et s'applique à d'autres configurations de machine, en particulier pour ce qui concerne les divers axes de mobilité de la tête de dépose vis à vis du mandrin.

**Revendications**

1. Procédé de pilotage de dépose de mèches par enroulement ou au contact sur des structures de grandes dimensions, dans lequel la dépose est effectuée sur un mandrin (1) entraîné en rotation autour de son axe (θ) par un dispositif de support/entraînement approprié, à l'aide d'une tête de dépose (6) appropriée, réglable en position suivant au moins un premier axe de déplacement rectiligne (X) parallèle à l'axe de rotation (θ) du mandrin et un second axe de déplacement rectiligne (Y) orthogonal audit axe du mandrin, **caractérisé en ce qu'**il consiste :

   - à prendre comme axe-maître l'axe de rotation (θ) du mandrin (1),
   - à commander l'axe-maître (θ) par des consignes de vitesse suivant un programme pré-établi,
   - à obtenir l'information position angulaire instantanée du mandrin au cours de sa rotation et,
   - à partir d'une table trajectoire préétablie (21) intégrant la cinématique de l'axe-maître et donnant pour chaque axe-esclave les valeurs de consigne correspondant à des positions angulaires prédéterminées de l'axe-maître, à asservir les autres axes (X, Y, β, γ, 8, 9) dits axes esclaves à l'axe-maître en fonction de la position angulaire de l'axe-maître, ce, à partir de la position angulaire instantanée de l'axe-maître (θ), en calculant à partir de ladite table trajectoire (21), pour chaque position instantanée de l'axe maître, les valeurs de consigne correspondantes de chaque axe-esclave et en appliquant ces consignes audits axes-esclaves (X, Y, β, γ, 8, 9).

2. Machine pour la mise en oeuvre du procédé selon la revendication 1, comprenant :

   - des moyens (2, 3) pour supporter et entraîner un mandrin (1) en rotation à l'horizontale autour de son axe (θ) ;
   - une tête (6) de dépose de mèches, mobile suivant au moins un premier axe de déplacement rectiligne (X) parallèle à l'axe (θ) du mandrin et un second axe de déplacement rectiligne (Y) orthogonal à l'axe du mandrin ;
   - un stand (11) de bobines de mèches alimentant ladite tête (6) ;
   - des moyens (10) de commande/contrôle informatisés incluant une commande numérique (CN) et son pupitre de contrôle ;

   **caractérisée en ce que** ladite commande numérique (CN) comprend un générateur (13) relié aux moyens de commande des divers axes de rotation ou déplacement (θ, X, Y), un interpolateur (19), une commande de vitesse (20) et une table trajectoire (21), un dispositif codeur incrémental (25) de la position angulaire instantanée de l'ensemble rotatif du mandrin étant relié audit interpolateur (19).

3. Machine suivant la revendication 2, **caractérisée en ce qu'**elle comporte, en outre, au moins un axe de rotation (β) de la tête de dépose (6).

4. Machine suivant la revendication 3, **caractérisée en ce qu'**elle comporte un axe de rotation de la tête (6) dit coude (β), vertical et orthogonal au second axe de déplacement (Y) et un axe de rotation de la tête (6) dit poignet (γ), orthogonal aux deux derniers axes.

5. Machine suivant la revendication 4, **caractérisée en ce qu'**elle comporte, en outre, deux axes supplémentaires (8,9) de rotation de la tête de dépose (6) parallèlement à l'axe (θ) du mandrin (1), afin de permettre une dépose au contact à l'aide d'une tête appropriée.

6. Machine suivant l'une des revendications 2 à 5, **caractérisée en ce que** le dispositif codeur comprend un codeur associé au moteur (12) d'entraînement du mandrin (1).

7. Machine suivant l'une des revendications 2 à 5, **caractérisée en ce que** le dispositif codeur comprend un codeur associé au mandrin (1).

8. Machine suivant l'une des revendications 2 à 5, **caractérisée en ce que** le dispositif codeur comprend deux codeurs associés, l'un, au moteur (12) d'entraînement du mandrin (1) et, l'autre, au mandrin (1).

9. Machine suivant l'une des revendications 2 à 8, **caractérisée en ce que** le moteur (12) d'entraînement du mandrin (1) est asservi par une boucle de vitesse (14).

10. Machine suivant l'une des revendications 2 à 9, **caractérisée en ce que** le moteur de commande de chaque axe-esclave (X, Y, β, γ, 8, 9) est asservi par une boucle de vitesse (17).

11. Machine suivant la revendication 10, **caractérisée en ce que** chaque axe-esclave (X, Y, β, γ, 8, 9) est en outre asservi en position à l'aide d'un filtre correcteur proportionnel et intégral (22) prenant en compte les erreurs de position détectées à l'aide d'un codeur (23) et d'un filtre anticipateur (24).

12. Machine suivant l'une des revendications 2 à 11, **caractérisée en ce qu'**un découplage est réalisé dans les déplacements rectilignes (X) de la tête de dépose (6) parallèlement à l'axe (θ) du mandrin, en disposant la tête (6') et le stand de mise en tension des mèches (11') sur un chariot de bobinage (4'') monté mobile parallèlement à l'axe du mandrin sur un chariot suiveur (4') monté lui-même mobile parallèlement audit axe du mandrin.

**Claims**

1. A method of controlling the depositing of strands by winding or in contact on structures of large dimensions, in which the deposition is effected on a mandrel (1) driven in rotation about its axis (θ) by a suitable support/drive device, by means of a suitable deposition head (6), adjustable for position along at least a first rectilinear movement axis (X) parallel to the rotation axis (θ) of the mandrel and a second rectilinear movement axis (Y) orthogonal to said axis of the mandrel, **characterised in that** it comprises:

   - taking as the master axis the rotation axis (θ) of the mandrel (1),

   - controlling the master axis (θ) by means of speed instructions in accordance with a pre-established program,

   - obtaining the information about the instantaneous angular position of the mandrel during its rotation, and

- from a pre-established trajectory table (21) integrating the kinematics of the master axis and giving for each slave axis the instruction values corresponding to predetermined angular positions of the master axis, slaving the other axes (X, Y, β, γ, 8, 9) referred to as slave axes to the master axis according to the angular position of the master axis, and, this from the instantaneous angular position of the master axis (θ), by calculating from said trajectory table (21), for each instantaneous position of the master axis, the corresponding instruction values of each slave axis and applying these instructions to said slave axes (X, Y, β, γ, 8, 9).

2. A machine for implementing the method according to claim 1, comprising:

- means (2, 3) for supporting and driving a mandrel (1) rotating horizontally about its axis (θ);

- a drum depositing head (6), able to move along at least a first rectilinear movement axis (X) parallel to the axis (θ) of the mandrel and a second rectilinear movement axis (Y) orthogonal to the axis of the mandrel;

- a stand (11) of strand reels supplying said head (6);

- computerised control/actuation means (10) including a numeric control (CN) and its control console;

**characterised in that** said numeric control (CN) comprises a generator (13) connected to the means for controlling the various rotation or movement axes (θ, X, Y), an interpolator (19), a speed control (20) and a trajectory table (21), an incremental coding device (25) for the instantaneous angular position of the rotary assembly of the mandrel being connected to said interpolator (19).

3. A machine according to claim 2, **characterised in that** it also comprises at least one rotation axis (β) for the deposition head (6).

4. A machine according to claim 3, **characterised in that** it comprises a rotation axis for the head (6) referred to as the elbow (β), vertical and orthogonal to the second movement axis (Y), and a rotation axis for the head (6), referred to as the wrist (γ), orthogonal to the last two axes.

5. A machine according to claim 4, **characterised in**

**that** it also comprises two additional rotation axes (8, 9) for the deposition head (6) parallel to the axis (θ) of the mandrel (1), so as to allow deposition in contact by means of a suitable head.

6. A machine according to one of claims 2 to 5, **characterised in that** the coding device comprises a coder associated with the motor (12) driving the mandrel (1).

7. A machine according to one of claims 2 to 5, **characterised in that** the coding device comprises a coder associated with the mandrel (1).

8. A machine according to one of claims 2 to 5, **characterised in that** the coding device comprises two coders associated one with the motor (12) driving the mandrel (1) and the other with the mandrel (1).

9. A machine according to one of claims 2 to 8, **characterised in that** the motor (12) driving the mandrel (1) is slaved by a speed loop (14).

10. A machine according to one of claims 2 to 9, **characterised in that** the motor controlling each slave axis (X, Y, β, γ, 8, 9) is slaved by a speed loop (17).

11. A machine according to claim 10, **characterised in that** each slave axis (X, Y, β, γ, 8, 9) is also slaved in terms of position by means of a proportional integral correcting filter (22) taking account of the position errors detected by means of a coder (23) and an anticipating filter (24).

12. A machine according to one of claims 2 to 11, **characterised in that** a decoupling is effected in the rectilinear movements (X) of the deposition head (6) parallel to the axis (θ) of the mandrel, by disposing the head (6') and the stand (11") tensioning the strands (11') on a winding carriage (4") mounted so as to be able to move parallel to the axis of the mandrel on a follower carriage (4') itself mounted so as to be able to move parallel to said axis of the mandrel.

**Patentansprüche**

1. Verfahren zum Steuern des Ablegens von Faserbündeln durch Wickeln oder in Kontakt auf Strukturen mit großen Abmessungen, wobei in dem Verfahren das Ablegen auf einem Dorn (1), der durch eine geeignete Unterstützungs-/Antriebsvorrichtung um seine Achse (θ) rotatorisch angetrieben wird, mit Hilfe eines geeigneten Ablegekopfes (6), dessen Position wenigstens längs einer ersten geradlinigen Verlagerungsachse (X) parallel zur Drehachse (θ) des Dorns und längs einer zweiten geradlinigen Verlageningsachse (Y) senkrecht zur Achse des Dorns einstellbar ist, ausgeführt wird, **dadurch gekennzeichnet, dass** es darin besteht

- als Hauptachse die Drehachse ($\theta$) des Dorns (1) zu verwenden,
- die Hauptachse ($\theta$) durch Geschwindigkeitssollwerte entsprechend einem im Voraus erstellten Programm zu steuern,
- momentane Winkelpositionsinformationen des Dorns während seiner Drehung zu erhalten und
- anhand einer im Voraus erstellten Bahntabelle (21), die die Kinematik der Hauptachse integriert und für jede Nebenachse die Sollwerte, die den vorgegebenen Winkelpositionen der Hauptachse entsprechen, angibt, die anderen Achsen (X, Y, $\beta$, $\gamma$, 8, 9), die sogenannten Nebenachsen der Hauptachse, in Abhängigkeit von der Winkelposition der Hauptachse zu regeln, indem anhand der momentanen Winkelposition der Hauptachse ($\theta$) und anhand der Bahntabelte (21) für jede momentane Position der Hauptachse die entsprechenden Sollwerte jeder Nebenachse berechnet werden und diese Sollwerte auf die Nebenachsen (X, Y, $\beta$, $\gamma$, 8, 9) angewendet werden.

2. Maschine für die Ausführung des Verfahrens nach Anspruch 1, die umfasst:

- Mittel (2, 3), die einen Dorn (1) unterstützen und um seine Achse ($\theta$) horizontal rotatorisch antreiben;
- einen Faserbündel-Ablegekopf (6), der wenigstens längs einer ersten geradlinigen Verlagerungsachse (X) parallel zur Achse ($\theta$) des Dorns und einer zweiten geradlinigen Verlagerungsachse (Y) senkrecht zur Achse des Dorns beweglich ist;
- einen Stand (11) von Faserbündelspulen, der den Kopf (6) versorgt,
- rechnergestützte Steuerungs-/Kontrollmittel (10), die eine numerische Steuerung (CN) und deren Kontrollpult enthalten;

**dadurch gekennzeichnet, dass** die numerische Steuerung (CN) einen Generator (13), der mit den Steuerungsmitteln für die verschiedenen Dreh- oder Vertagerungsachsen ($\theta$, X, Y) verbunden ist, einen Interpolator (19), eine Geschwindigkeitssteuerung (20) und eine Bahntabelfe (21) umfasst, wobei eine inkrementierende Codierungsvorrichtung (25) für die momentane Winkelposition der Drehbaueinheit des Dorns mit dem Interpolator (19) verbunden ist.

3. Maschine nach Anspruch 2, **dadurch gekennzeichnet, dass** sie außerdem wenigstens eine Drehachse ($\beta$) des Ablegekopfes (6) umfasst.

4. Maschine nach Anspruch 3, **dadurch gekennzeichnet, dass** sie eine Drehachse des Kopfes (6), die Ellenbogen ($\beta$) genannt wird, vertikal und zur zweiten Vedagerungsachse (Y) senkrecht ist, und eine Drehachse des Kopfes (6), die Handgelenk ($\gamma$) genannt wird und zu den beiden letzteren Achsen senkrecht ist, umfasst.

5. Maschine nach Anspruch 4, **dadurch gekennzeichnet, dass** sie außerdem zwei zusätzliche Drehachsen (8, 9) des Ablegekopfes (6) umfasst, die zu der Achse ($\theta$) des Dorns (1) parallel sind, um ein Ablegen in Kontakt mit Hilfe eines geeigneten Kopfes zu ermöglichen.

6. Maschine nach einem der Ansprüche 2 bis 5, **dadurch gekennzeichnet, dass** die Codiervorrichtung einen Codierer umfasst, der dem Antriebsmotor (12) des Dorns (1) zugeordnet ist.

7. Maschine nach einem der Ansprüche 2 bis 5, **dadurch gekennzeichnet, dass** die Codiervorrichtung einen dem Dorn (1) zugeordneten Codierer umfasst.

8. Maschine nach einem der Ansprüche 2 bis 5, **dadurch gekennzeichnet, dass** die Codiervorrichtung zwei Codierer umfasst, wovon einer dem Antriebsmotor (12) des Dorns (1) und der andere dem Dorn (1) zugeordnet ist.

9. Maschine nach einem der Ansprüche 2 bis 8, **dadurch gekennzeichnet, dass** der Antriebsmotor (12) des Dorns (1) durch eine Geschwindigkeitsschleife (14) geregelt wird.

10. Maschine nach einem der Ansprüche 2 bis 9, **dadurch gekennzeichnet, dass** der Steuermotor jeder Nebenachse (X, Y, $\beta$, $\gamma$, 8, 9) durch eine Geschwindigkeitsschleife (17) geregelt wird.

11. Maschine nach Anspruch 10, **dadurch gekennzeichnet, dass** jede Nebenachse (X, Y, $\beta$, $\gamma$, 8, 9) außerdem in Bezug auf ihre Position mit Hilfe eines Proportional-/Integral-Korrekturfilters (22) geregelt wird, das die mit Hilfe eines Codierers (23) und eines Vorhersagefilters (24) erfassten Positionsfehler berücksichtigt.

12. Maschine nach einem der Ansprüche 2 bis 11, **dadurch gekennzeichnet, dass** in den geradlinigen Verlagerungen (X) des Ablegekopfes (6) parallel zur Achse ($\theta$) des Dorns eine Entkoppfung erfolgt, indem der Kopf (6') und der Faserbündel-Spannstand (11") auf einem Wicklungsschlitten (4") angeordnet sind, der parallel zur Achse des Dorns auf einem Folgerschlitten (4') beweglich angebracht ist, der seinerseits parallel zur Achse des Dorns beweglich angebracht ist.

FIG.1

**FIG.2**

FIG.3